# EUROPEAN PATENT APPLICATION

(11) **EP 4 525 521 A1**
(43) Date of publication of application: **19.03.2025**
(21) Application number: 23850276.9
(22) Date of filing: 11.07.2023
(51) Int. Cl.: H04W 36/00, H04W 36/30, H04W 36/08, H04W 16/28

(54) **METHOD AND DEVICE FOR IMPROVING LAYER 1 MEASUREMENT AND REPORTING FOR SUPPORTING LAYER 1/LAYER 2-BASED INTER-CELL MOVEMENT IN NEXT GENERATION MOBILE COMMUNICATION SYSTEM**

(30) Priority: 01.08.2022 KR 20220095406
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2023/009855
(87) International publication number: WO 2024/029769

(57) **Abstract**

The present disclosure relates to: a communication technique that integrates a 5G communication system for supporting a higher data transmission rate than a 4G system with IoT technology; and a system therefor. The present disclosure may be applied to intelligent services (for example, smart homes, smart buildings, smart cities, smart cars or connected cars, healthcare, digital education, retail business, security and safety-related services, etc.) on the basis of 5G communication technology and IoT-related technology. The present disclosure discloses a method and device for measurement setup and reporting for inter-cell movement.

## Description

### [Technical Field]

The disclosure relates to a measurement configuration and reporting for movement between cells.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands, (e.g., 60GHz bands) so as to accomplish higher data rates. To decrease propagation loss of the radio waves and increase the transmission distance of radio waves in the ultrahigh frequency bands, beamforming, massive multiple-input multiple-output (massive MIMO), full dimensional MIMO (FD-MIMO), array antenna, analog beam forming, large scale antenna techniques are under discuss ion in the 5G communication systems. In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

Meanwhile, in order to support communication of a UE using an optimal beam, the UE may be configured to measure beams of neighbor cells supporting beam switching while maintaining a connected state with a specific serving cell. At this time, it is required to improve a measurement and report method of the UE for cell switching.

### [Disclosure of Invention]

### [Technical Problem]

An aspect of the disclosure is to provide a method of measuring and reporting beams belonging to other cells when a terminal receives a service through a specific beam from a current serving cell, and when a beam of a neighbor cell is better, performing cell switching to the corresponding beam. The disclosure is to solve the part that is inefficient since a delay time is long according to the conventional cell switching procedure, and particularly proposes a method of measuring and reporting beams in order to move to neighbor cells.

### [Solution to Problem]

A method of a base station in a wireless communication system according to an embodiment of the disclosure to solve the problem may include transmitting a radio resource control (RRC) message including first information on a serving cell for serving a terminal and second information on a candidate cell related to a cell switching procedure to the terminal and receiving a report on layer 1 (L1) measurement for the candidate cell from the terminal, based on the RRC message, wherein the second information may include cell configuration information of the candidate cell, and the report may be received by the serving cell, based on a configuration for a measurement report included in the first information.

A method of a terminal in a wireless communication system according to an embodiment of the disclosure may include receiving a radio resource control (RRC) message including first information on a serving cell for serving the terminal and second information on a candidate cell related to a cell switching procedure from a base station, performing layer 1 (L1) measurement for the candidate cell, based on the RRC message, and transmitting a report on the L1 measurement to the base station, based on a configuration for a measurement report included in the first information, wherein the second information may include cell configuration information of the candidate cell.

A base station in a wireless communication system according to an embodiment of the disclosure may include a transceiver and a controller configured to control the transceiver to transmit a radio resource control (RRC) message including first information on a serving cell for serving a terminal and second information on a candidate cell related to a cell switching procedure from the terminal and control the transceiver to receive a report on layer 1 (L1) measurement for the candidate cell from the terminal, based on the RRC message, wherein the second information may include cell configuration information of the candidate cell, and the report may be received by the serving cell, based on a configuration for a measurement report included in the first information.

A terminal in a wireless communication system according to an embodiment of the disclosure may include a transceiver and a controller configured to control the transceiver to receive a radio resource control (RRC) message including first information on a serving cell for serving the terminal and second information on a candidate cell related to a cell switching procedure from a base station, perform layer 1 (L1) measurement for the candidate cell, based on the RRC message, and control the transceiver to transmit a report on the L1 measurement to the base station, based on a configuration for a measurement report included in the first information, wherein the second information may include cell configuration information of the candidate cell.

### [Advantageous Effects of Invention]

The disclosure may provide a method of allowing a terminal to measure beams of cells that are not a serving cell and determining a handover operation through such a beam measurement by proposing a layer 1 measurement and report method for layer 1 and layer 2 (L1/L2)-based beam switching and a handover. Accordingly, there are effects of supporting beam switching to a neighbor cell and a handover operation through the layer 1-based beam measurement and making data transmission and reception possible after switching the beam to another cell through reduction in a delay time compared to the conventional procedure.

### [Brief Description of Drawings]

FIG. 1 illustrates a structure of a next-generation mobile communication system to which the disclosure is applied.
FIG. 2 illustrates a radio protocol structure of a next-generation mobile communication system to which the disclosure is applicable.
FIG. 3 illustrates a structure of another next-generation mobile communication system to which the disclosure can be applied.
FIG. 4 is a scenario for beam management between cells referred to by the disclosure, and illustrates a scenario in which a user equipment (UE) transmits and receives data through beams of transmission/reception points (TRPs) of neighboring cells that support a beam change, based on L1/L2 while maintaining the connection state with the serving cell.
FIG. 5A illustrates a scenario in which the UE switches the serving cell and the beam to a TRP of a cell supporting L1/L2-based beam switching and transmits and receives data according to an example of the disclosure.
FIG. 5B illustrates a scenario in which the UE switches the serving cell and the beam to a TRP of a cell supporting L1/L2-based beam switching and transmits and receives data according to an example of the disclosure.
FIG. 6 illustrates the overall operation of inter-cell beam management in FIG. 4 referred to by the disclosure.
FIG. 7 is example 1 applied to the disclosure and illustrates the overall operation of performing a handover after L1/L2 inter-cell beam management is applied.
FIG. 8 is example 2 applied to the disclosure and illustrates the overall operation of performing an L1/L2 inter-cell handover.
FIG. 9 illustrates the overall UE operation which is applied to examples of the disclosure and in which L1/L2-based beam switching and handover is performed and, particularly, a UE operation including a channel measurement and report method of the UE.
FIG. 10 illustrates a BS operation applied to examples of the disclosure.
FIG. 11 is a block diagram illustrating an internal structure of the UE that applies the disclosure.
FIG. 12 is a block diagram illustrating a configuration of the BS according to the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards.

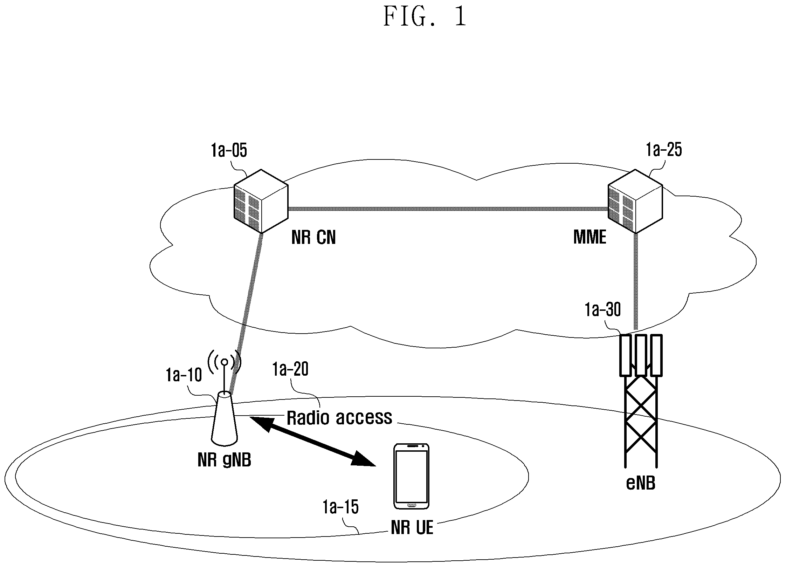

FIG. 1 illustrates a structure of a next-generation mobile communication system to which the disclosure is applied.

Referring to FIG. 1, as illustrated therein, a radio access network of a next-generation mobile communication system includes a next-generation base station (new radio node B, hereinafter NR NB) 1a-10, and a new radio core network (NR CN) or next generation core network (NG CN) 1a-05. A user terminal (new radio user equipment, hereinafter NR UE or NR terminal) 1a-15 accesses an external network via the NR NB 1a-10 and the NR CN 1a-05.

In FIG. 1, the NR NB 1a-10 corresponda to an evolved node B (eNB) of a conventional LTE system. The NR NB is connected to the NR UE 1a-15 through a radio channel and may provide outstanding services as compared to a conventional node B. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the NR NB 1a-10 serves as the device. In general, one NR NB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The NR CN 1a-05 performs functions such as mobility support, bearer configuration, and QoS configuration. The NR CN is a device responsible for various control functions as well as a mobility management function for a UE, and is connected to multiple base stations. In addition, the next-generation mobile communication system may interwork with the existing LTE system, and the NR CN is connected to an MME 1a-25 via a network interface. The mobility management entity (MME) is connected to an eNB 1a-30 that is a conventional base station.

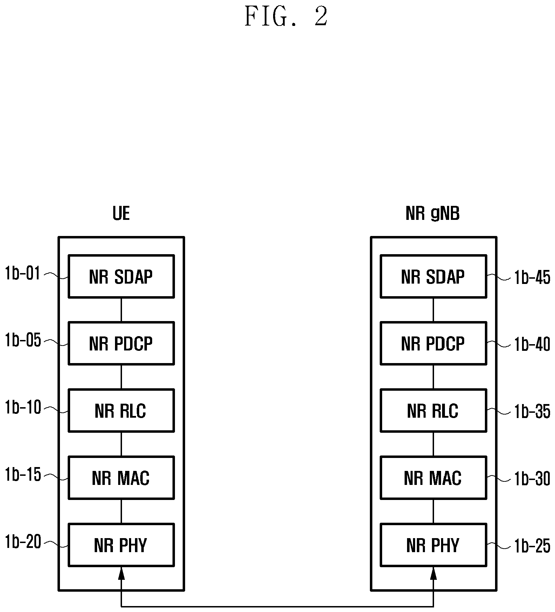

FIG. 2 illustrates a radio protocol structure of a next-generation mobile communication system to which the disclosure is applicable.

Referring to FIG. 2, a radio protocol of a next-generation mobile communication system includes an NR service data adaptation protocol (SDAP) 1b-01 or 1b-45, an NR packet data convergence protocol (PDCP) 1b-05 or 1b-40, an NR radio link control (RLC) 1b-10 or 1b-35, and an NR medium access controls (MAC) 1b-15 or 1b-30 on each of UE and NR base station sides.

The main functions of the NR SDAP 1b-01 or 1b-45 may include some of functions below.

### Transfer of user plane data

Mapping between a QoS flow and a DRB for both DL and UL
Marking QoS flow ID in both DL and UL packets
Reflective QoS flow to DRB mapping for UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1b-05 or 1b-40 may include some of functions below.
- Header compression and decompression: ROHC only
- Transfer of user plane data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 1b-10 or 1b-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device refers to a function of transferring RLC SDUs received from a lower layer to an upper layer in sequence, and may include a function of, if one original RLC SDU is divided into several RLC SDUs and then the RLC SDUs are received, reassembling the several RLC SDUs and transferring the reassembled RLC SDUs, may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, may include a function of requesting retransmission of lost RLC PDUs, may include a function of, if there is a lost RLC SDU, sequentially transferring only RLC SDUs before the lost RLC SDU to an upper layer, may include a function of, although there is a lost RLC SDU, if a predetermined timer has expired, sequentially transferring, to an upper layer, all the RLC SDUs received before the timer is started, or may include a function of, although there is a lost RLC SDU, if a predetermined timer has expired, sequentially transferring all the RLC SDUs received up to the current, to an upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1b-15 or 1b-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1b-20 or 1b-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

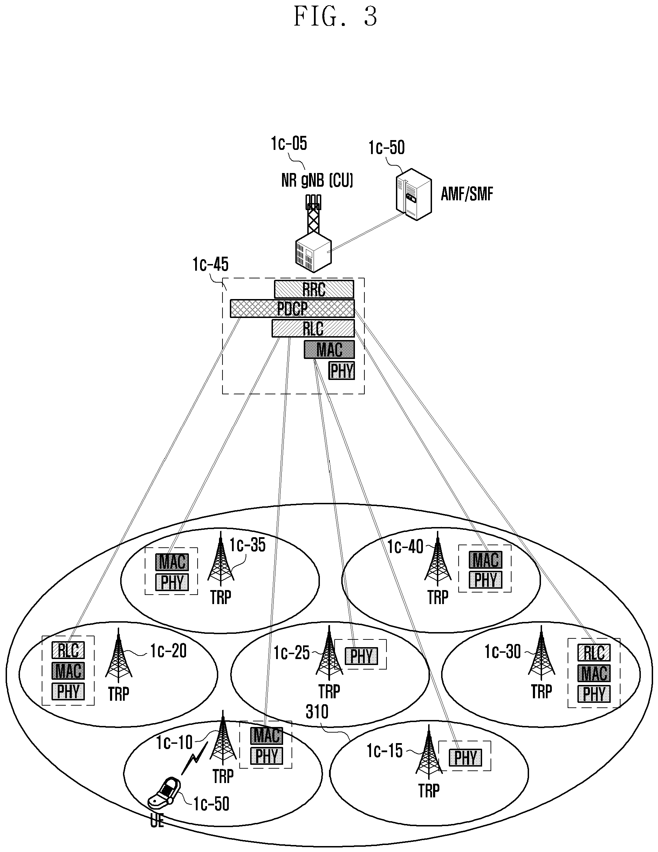

FIG. 3 illustrates a structure of another next-generation mobile communication system to which the disclosure can be applied.

Referring to FIG. 3, a cell served by an NR gNB 1c-05 operating based on the beam may include a plurality of transmission reception points (TRPs) 1c-10, 1c-15, 1c-20, 1c-25, 1c-30, 1c-35, and 1c-40. The TRPs 1c-10 to 1c-40 indicate blocks that separate some functions of transmitting and receiving physical signals by the conventional NR gNB (eNB) and includes a plurality of antennas. The NR gNB 1c-05 may be expressed as a central unit (CU) and the TRP may be expressed as a distributed unit (DU). Functions of the NR gNB 1c-05 and the TRP may be configured through separation of layers such as PDCP/RLC/MAC/PHY layers 1c-45. That is, the TRPs may have only the PHY layer and perform a function of the corresponding layer as indicated by reference numerals 1c-15 and 1c-25, the TRPs may have only the PHY layer and the MAC layer and perform functions of the corresponding layers as indicated by reference numerals 1c-10, 1c-35, and 1c-40, and the TRPs may have only the PHY layer, the MAC layer, and the RLC layer and perform functions of the corresponding layers as indicated by reference numerals 1c-20 and 1c-30. Particularly, the TRPs 1c-10 to 1c-40 may use a beamforming technology of generating narrow beams in various directions through a plurality of transmission and reception antennas to transmit and receive data. The UE 1c-50 accesses the NR gNB 1c-05 and the external network through the TRPs 1c-10 to 1c-40. In order to provide a service to users, the NR gNB 1c-05 collects and schedules status information such as buffer statuses, available transmission power statuses, and channel statuses of UEs and supports the connection between the UEs and a core network (CN), particularly, an access and mobility management function (AMF)/session management function (SMF) 1c-50.

The TRP in the disclosure is described based on structures 1c-15 and 1c-25 having only the PHY layer to perform the function of the corresponding layer.

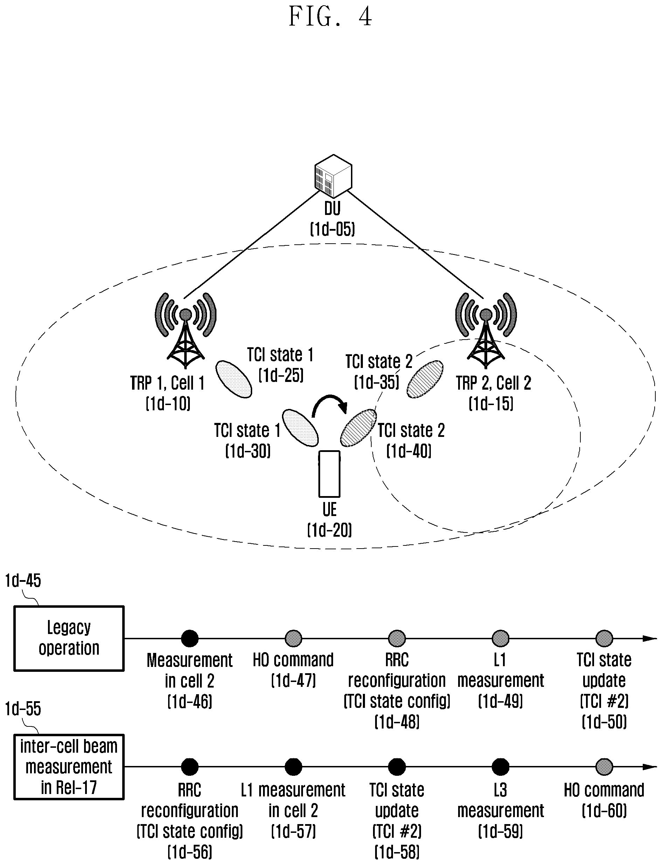

FIG. 4 is a scenario for beam management between cells referred to by the disclosure, and illustrates a scenario in which the UE transmits and receives da
ta through beams of transmission/reception points (TRPs) of neighbor cells that support beam switching, based on L1/L2 while maintaining the connection state with the serving cell.

FIG. 4 illustrates the case where a plurality of cells (TRP1-Cell1 and TRP2-Cell2) 1d-10 and 1d-15 exists within one distributed unit (DU) 1d-05, but the overall content of the disclosure can be applied to the case of an inter-DU (each DU constitutes one TRP-Cell). Further, in the entirety of the disclosure, a cell (TRP 2, Cell 2) that is not the serving cell, supporting L1/L2-based mobility (beam switching and serving cell switching), is interchangeably used with neighbor cells, non-serving cells, additional cells with a physical cell ID (PCI) different from the serving cell, or the like.

In the conventional UE beam switching procedure 1d-45, a UE 1d-20 may transmit and receive data in a connected state through TRP 1 1d-10 of serving cell 1 and may be in transmission configuration indicator (TCI) states 1 1d-25 and 1-30 corresponding to the optimal beam. In such an operation, the UE may receive an indication of configuration information for L3 channel measurement (radio resource management (RRM)) for an additional cell (TRP2-Cell 2) 1d-15 having a PCI different from the serving cell from the serving cell 1d-10 through RRC configuration information and performs an L3 measurement operation 1d-46 for the corresponding frequency and cell, based thereon. Thereafter, the serving cell (TRP 1-Cell 1) 1d-10 may indicate a handover to the corresponding cell (TRP 2-Cell 2) 1d-15, based on a measurement value reported by the UE in operation 1d-47, thereafter, the handover of the UE is completed, and additional RRC configuration information may be transferred to the UE 1d-20 through TRP 1-Cell 2 1d-15 in operation 1d-48. The RRC configuration information may include uplink (UL)/downlink (DL) configuration information in the corresponding cell and L1 measurement-related configuration (channel state information (CSI)-reference signal (RS) measurement and report), and particularly, include TCI state configuration information for a physical downlink control channel (PDCCH) and a physical downlink shared channel (PDSCH). The UE performs L1 measurement according to the configuration in operation 1d-49, and the gNB updates a TCI state through L1/L2 signaling according to a measurement report of the UE in operation 1d-50. TCI state 2 1d-40 corresponding to the optimal beam may be indicated to the UE. At this time, the serving cell of the UE is Cell 1 before the handover, and Cell 2 is the serving cell of the UE after the handover. That is, even after the handover, a lot of procedures and time are required to indicate the optimal beam to the UE.

Unlike the conventional UE beam switching procedure 1d-45, an improved beam switching scheme 1d-55 considered in the disclosure is described below. Through RRC configuration information 1d-56 from the serving cell 1d-10, the UE may transfer a beam configuration related to the additional cell (TRP 2-Cell 2) 1d-15 having the PCI different from the serving cell with reference to the corresponding serving cell. For example, a method of indicating the beam configuration related to the additional cell (TRP 2-Cell 2) 1d-15 having the PCI different from the serving cell, that is, the TCI state corresponding to TRP2 in connection with a new cell ID (physical cell ID (PCI); additional PCI-r17) is applied.

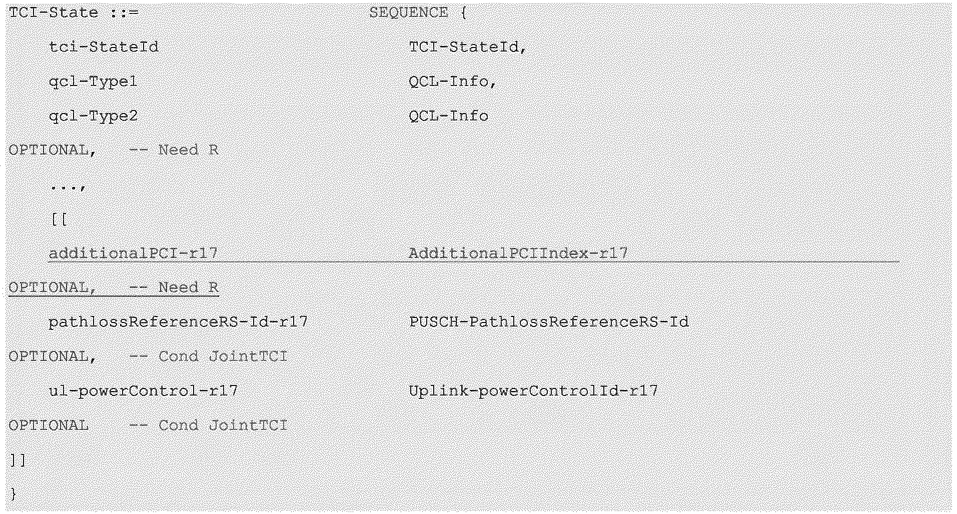

Further, in order to manage the corresponding inter-cell beam, a unified TCI state framework is applied. The unified TCI state framework corresponds to the application of a common TCI state framework to the uplink and downlink and the common channel and dedicated channel, in which one of a joint UL/DL mode and a separate UL/DL mode may be configured.

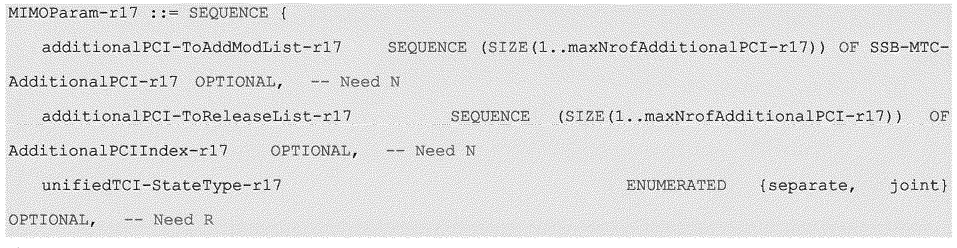

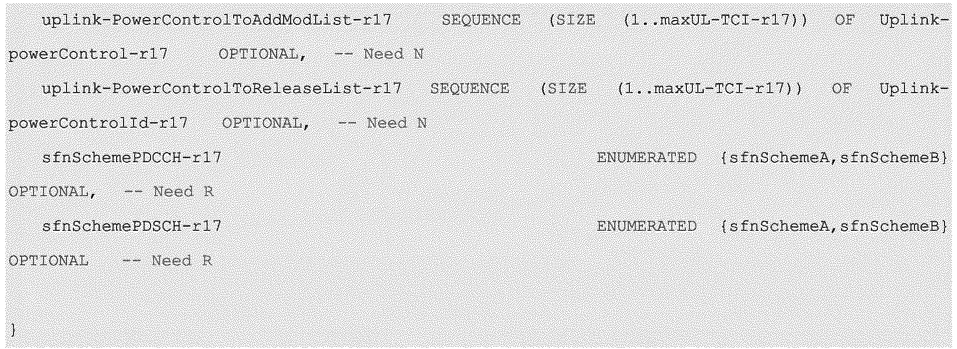

### 1. Joint UL/DL mode: the UL and the DL are configured to share the same TCI configuration (in PDSCH-Config)

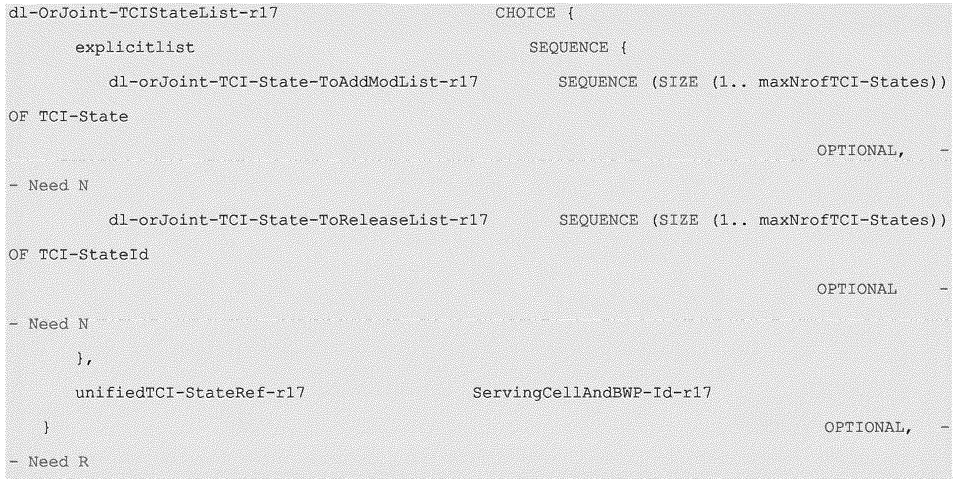

### 2. Separate UL/DL mode: the UL and the DL provide respective TCI configurations. The TCI state for the DL follows the configuration in dl-OrJoint-TCIStateList-r17 (in PDSCH-Config) and the TCI state for the UL follows ul-TCI-StateList-r17 (in BWP-UplinkDedicated)

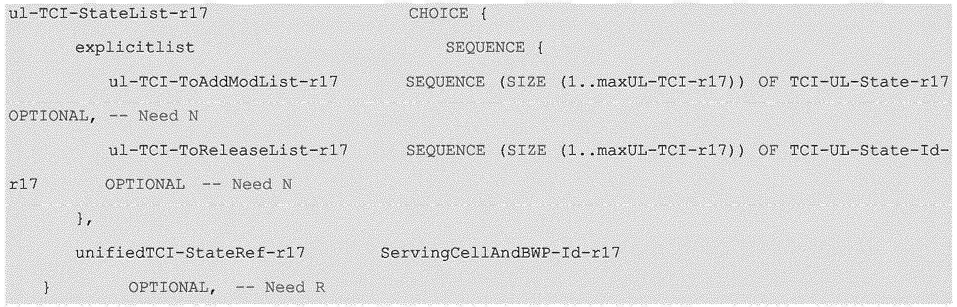

In the RRC-connected state with serving cell 1, after the configuration for TRP 2-Cell 2 is provided, the UE performs L1 measurement for corresponding TRP 2-Cell 2 according to the configuration and reports the corresponding result to the serving cell (Cell 1) 1d-10 in operation 1d-57. When it is determined that switching to a specific beam (TCI state 2) 1d-35 or 1d-40 of TRP 2 (Cell 2) 1d-15 is needed rather than a serving cell beam (TCI state 1) 1d-25 or 1d-30 according to the measurement result, the serving cell triggers beam switching and indicates the same to the UE through L1/L2 signaling in operation 1d-58. The UE may switch to the specific beam (TCI state 2) 1d-40 of TRP 2 (Cell 2) 1d-15 through the corresponding indication and performs a physical channel configuration and higher-layer configuration related to the configured beam. Since the corresponding operation, the UE is in the connected state with the serving cell (Cell 1) 1d-10, but performs data transmission and reception through a channel link of TRP 2 (Cell 2) 1d-15 (receives a PDCCH/PDSCH and transmits a physical uplink control channel (PUCCH)/physical uplink shared channel (PUSCH)). That is, transmission and reception of a common control channel are performed through the serving cell (Cell 1) 1d-10. Thereafter, the UE performs an L3 measurement operation according to a measurement configuration configured in the independent serving cell in operation 1d-59, and receives a handover command message from the serving base station (BS) (cell 1) and may perform serving cell switching to Cell 2 in operation 1d-60. Through the scheme 1d-55, the UE may perform data transmission and reception with specific TRP 2 of Cell 2 supporting L1/L2-based mobility in the connected state with the serving cell and continuously use the corresponding beam even after the handover.

For reference, a configuration related to the L1 measurement and the report in operation 1d-57 and an RRC configuration for the operation are described below. The corresponding content is basically applied to the following embodiments of the disclosure, and an improved scheme may be added to embodiments below.

### 1. CSI measurement configuration

- CSI-RS resources and resource pool to be measured (nzp-CSI-RS, csi-interference management (IM), and csi-synchronization signal block (SSB))
- CSI-RS resource configuration to be measured (aperiodic, semi-persistent) and triggering configuration
- When CSI-RS resources refer to SSB resources, additional PCI information may be provided to make L1 measurement from neighbor cells possible (a maximum of 7 neighbor cells (PCI) can be added to one serving cell)

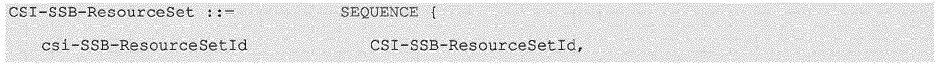

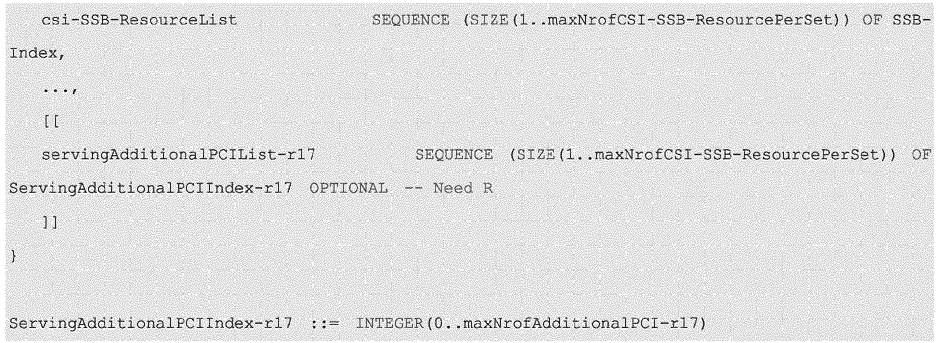

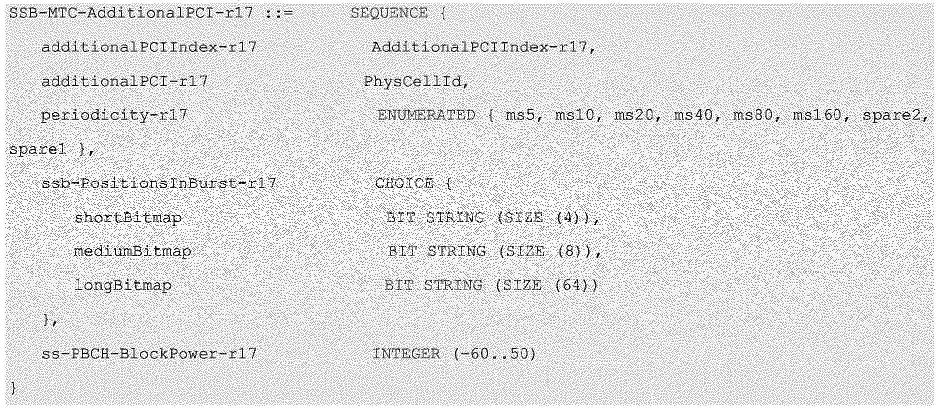

### 2. CSI report configuration

- Report type: periodic report, semi-persistent report for PUCCH, semi-persistent report for PUSCH, and aperiodic report for PUSCH
- Report quantity
- Configurations required for other reports

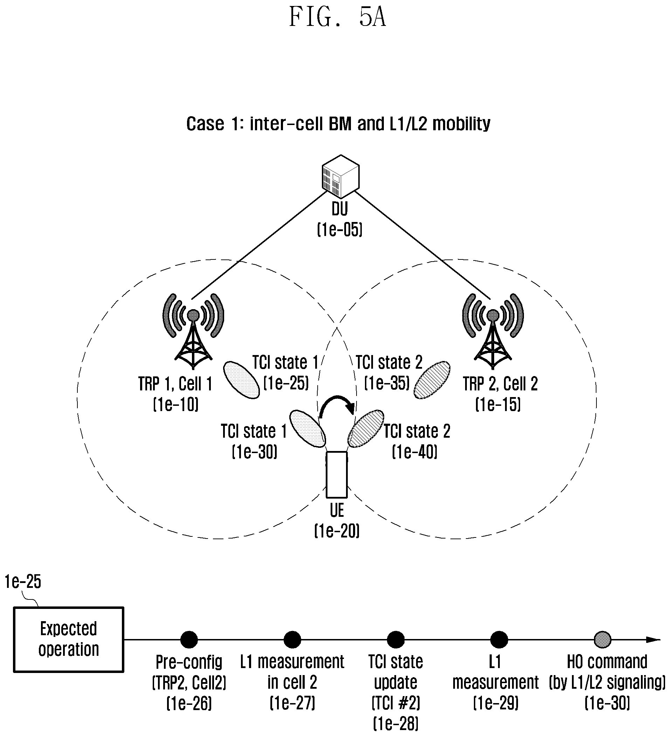

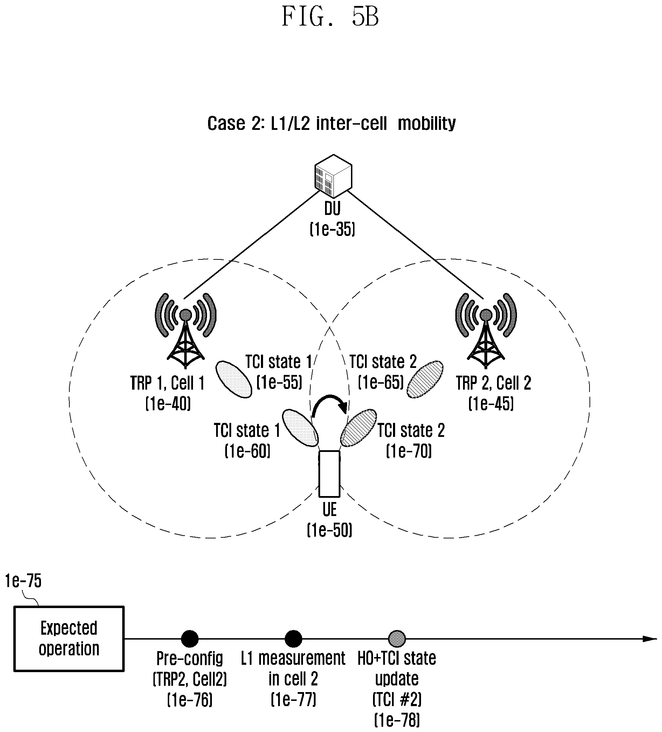

FIGs. 5A and 5B are embodiments considered in the disclosure and illustrate scenarios in which the UE switches a serving cell and a beam to a TRP of a cell supporting L1/L2 beam switching and transmits and receives data.

The figures illustrate the case where a plurality of cells (TRP1-Cell1 and TRP2-Cell2) 1e-10, 1e-15, 1e-40, and 1e-45 exists within one distributed unit (DU) 1e-05 or 1e-35, but the overall content of the disclosure can be applied to the case of an inter-DU (each DU constitutes one TRP-Cell).

Unlike the conventional UE beam switching procedures 1d-45 and 1d-55 described in FIG. 4, improved beam switching schemes 1e-25 and 1e-75 considered in the embodiments are described below.

### 1. Example 1 1e-25: performs L1/L2 handover after inter-cell beam management (switching) operation

### 2. Example 2 1e-75: directly performs L1/L2 handover

First, in description of the overall operation of example 1 with reference to FIG. 5A, the UE may receive common configuration and dedicated configuration information on an additional cell (TRP 2-Cell 2) 1e-15 having a PCI different from a serving cell from the serving cell 1e-10 through RRC configuration information in operation 1e-26. That is, configuration information corresponding to ServingCellID or candidateCellID (cell ID related to the PIC), ServingCellConfigCommon, and ServingCellConfig may be provided in advance to the UE. The corresponding configuration information may be provided in the form of a pre-configuration in the RRC configuration and may include configuration information on a plurality of cells. Further, the corresponding configuration includes all pieces of configuration information (cell configuration, bearer configuration, security key configuration, and the like) applied when the UE moves to (hands over) the corresponding cell. The corresponding configuration includes the unified TCI state configuration described in operation 1d-56 of FIG. 4 and configurations related to L1 measurement and report. The example of the drawings proposes in detail the L1 measurement and report configuration and the later UE operation for supporting the L1/L2-based handover in compared to the conventional L1/L2 measurement and report configuration described in operation 1d-56 of FIG. 4 and the UE operation according thereto. A detailed characteristic is described with reference to the following drawings in detail.

In the RRC-connected state with serving cell 1, after the configuration for TRP 2-Cell 2 1e-15 is provided, the UE performs L1 measurement for corresponding TRP 2-Cell 2 1e-15 according to the received configuration and reports the corresponding result to the serving cell (Cell 1) 1e-10 in operation 1e-27. When it is determined that switching to a specific beam (TCI state 2) 1e-40 of TRP 2 (Cell 2) 1e-15 is needed rather than to a serving cell beam (TCI state 1) 1e-25 according to the measurement result, the serving cell triggers beam switching and indicates the same to the UE through L1/L2 signaling in operation 1e-28. The UE performs beam switching to TRP 2 (Cell 2) 1e-15 through the corresponding indication and performs data transmission and reception through corresponding TRP 2 (Cell 2) 1e-15, based on the switched beam. At this time, serving cell switching is not performed, and the UE is still in the RRC-connected state with the serving cell (Cell 1) 1e-10. Thereafter, the UE performs L1 measurement for TRP 2-Cell 2 1e-15 and reports the corresponding result to the serving cell (Cell 1) 1e-10. When the L1 measurement reported by the UE satisfies a triggering condition for the handover to TRP 2-Cell 2 1e-15 (detailed operation is described below in detail), the serving cell (Cell 1) 1e-10 indicates the handover to the UE. The corresponding indication may be an L1/L2 message. That is, a MAC control element (CE) or downlink control information (DCI) may include an indicator indicating the handover.

In description of the overall operation of example 2 with reference to FIG. 5B, the UE may receive common configuration and dedicated configuration information on an additional cell (TRP 2-Cell 2) 1e-45 having a PCI different from a serving cell from the serving cell 1e-40 through RRC configuration information in operation 1e-76. That is, configuration information corresponding to ServingCellID or candidateCellID (cell ID related to the PIC), ServingCellConfigCommon, and ServingCellConfig may be provided in advance to the UE. The corresponding configuration information may be provided in the form of a pre-configuration in the RRC configuration and may include configuration information on a plurality of cells. Further, the corresponding configuration includes all pieces of configuration information (cell configuration, bearer configuration, security key configuration, and the like) applied when the UE moves to (hands over) the corresponding cell. The corresponding configuration includes the unified TCI state configuration described in operation 1d-56 of FIG. 4 and configurations related to L1 measurement and report. The example of the drawings proposes in detail the L1 measurement and report configuration and the later UE operation for supporting the L1/L2-based handover in compared to the conventional L1 measurement and report configuration described in operation 1d-56 of FIG. 4 and the UE operation according thereto. A detailed characteristic is described with reference to the following drawings in detail.

In the RRC-connected state with serving cell 1, after the configuration for TRP 2-Cell 2 1e-45 is provided, the UE performs L1 measurement for corresponding TRP 2-Cell 2 1e-45 according to the received configuration and reports the corresponding result to the serving cell (Cell 1) 1e-40 in operation 1e-77. When it is determined that beam switching to a specific beam (TCI state 2) 1e-70 of TRP 2 (Cell 2) 1e-45 rather than to a serving cell beam (TCI state 1) 1e-45 and the handover are needed at the same time according to the measurement result, the serving cell triggers the beam switching and the handover and indicates the same to the UE through L1/L2 signaling in operation 1e-78. The UE simultaneously performs beam switching to TRP 2 (Cell 2) 1e-15 and the handover through the corresponding indication and performs data transmission and reception through corresponding TRP 2 (Cell 2) 1e-15. At this time, the UE applies pre-configured configuration information for a target cell to have the handover in operation 1e-76. In the corresponding operation, the UE may perform random access or omit the random access procedure for the target cell according to whether uplink synchronization is needed. A detailed operation is described in the following drawing.

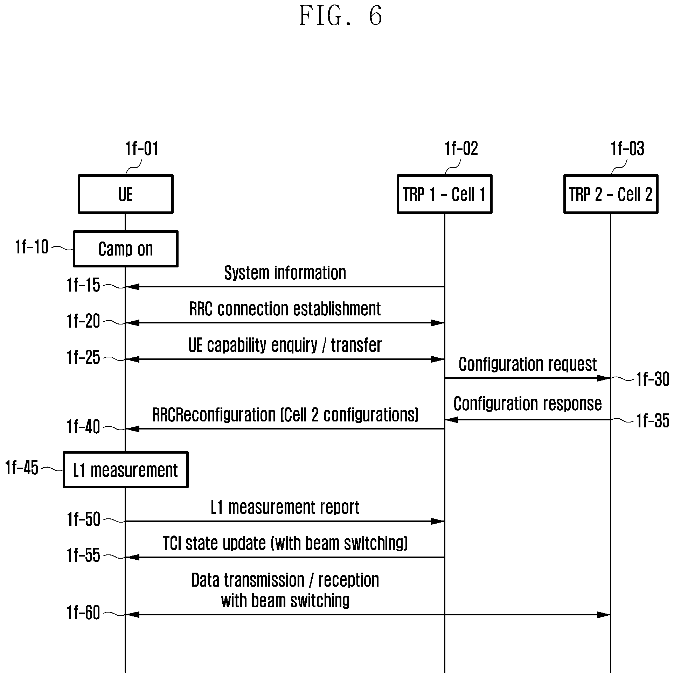

FIG. 6 illustrates the overall operation for inter-cell beam management in FIG. 4 referred to by the disclosure.

In a camp on state 1f-10, a UE 1f-01 receives system information from cell 1 1f-02 in operation 1f-15 and performs transition procedure to a connected state (RRC connection establishment) in operation 1f-20. Thereafter, a serving cell 1f-02 makes a request for UE capability (transmits a UE capability enquiry message) to the UE, and the UE transfers a UE capability information message including the UE capability to the BS according to the request from the BS in operation 1f-25. The capability information of the corresponding UE may include information on whether L1/L2-based inter-cell beam switching/management and handover are supported, and the UE transmits at least one of UE-specific capability, band-specific capability, or band combination-specific capability as the corresponding UE capability through signaling. The serving cell 1f-02 may make a request for configuration information required for performing L1/L2-based beam switching and handover by the corresponding UE to neighbor cell 2 1f-03 supporting L1/L2-based mobility (configuration request 1f-25), and cell 2 1f-03 transfers a response (configuration response) message including relevant configuration information to cell 1 1f-02 in response to the corresponding request in operation 1f-30. The procedures 1f-30 and 1f-35 may be omitted when cell 1 1f-02 and cell 2 1f-03 exist in one DU (intra-DU scenario) in implementation of the network. In operation 1f-40, the serving cell may transfer common/dedicated configuration information applied after L1/L2-based mobility (beam switching) to cell 2 1f-03 is indicated to the UE through an RRC reconfiguration message. For detailed configuration method and content, refer to FIG. 4. Particularly, for a TCI state configuration, L1 measurement, and a report configuration provided in operation 1f-40, refer to FIG. 4. In the above description, the number of neighbor cells may be plural, and the serving cell may perform the same procedure as the plurality of neighbor cells. For example, one serving cell may receive a configuration of a maximum of 7 neighbor cells.

Thereafter, the UE performs L1 measurement associated with TRP 2-Cell 2 while maintaining the connected state with the serving cell 1f-02 in operation 1f-45, and reports the corresponding measurement result to the serving cell 1f-02 according to a preset L1 measurement report configuration method in operation 1f-50. The serving cell 1f-02 may determine beam switching of the corresponding UE, based on the measurement result received from the UE, and when it is determined that beam switching to a specific beam of TRP 2-Cell 2 rather than to a specific beam (TRP1-Cell 1) of the serving cell is needed, indicate TCI state switching of the UE to a target cell (TRP 2-Cell 2) through L1/L2 signaling in operation 1f-55. L1/L2 signaling in operation 1f-55 may be a MAC CE or DCI, and information indicating switching to a specific beam of TRP 2-Cell 2 is included in the corresponding signaling. At this time, when a plurality of TCI states is activated, the MAC CE may be used and one of the activated TCI states may be indicated by DCI. Unlike this, the MAC CE may indicate only one TCI state. In this case, the DCI is omitted. In operation 1f-60, the UE switches the beam to the indicated beam in TRP 2-Cell 2 1f-03 and performs data transmission and reception through the corresponding beam. The UE maintains the RRC connection to the serving cell even during the operation.

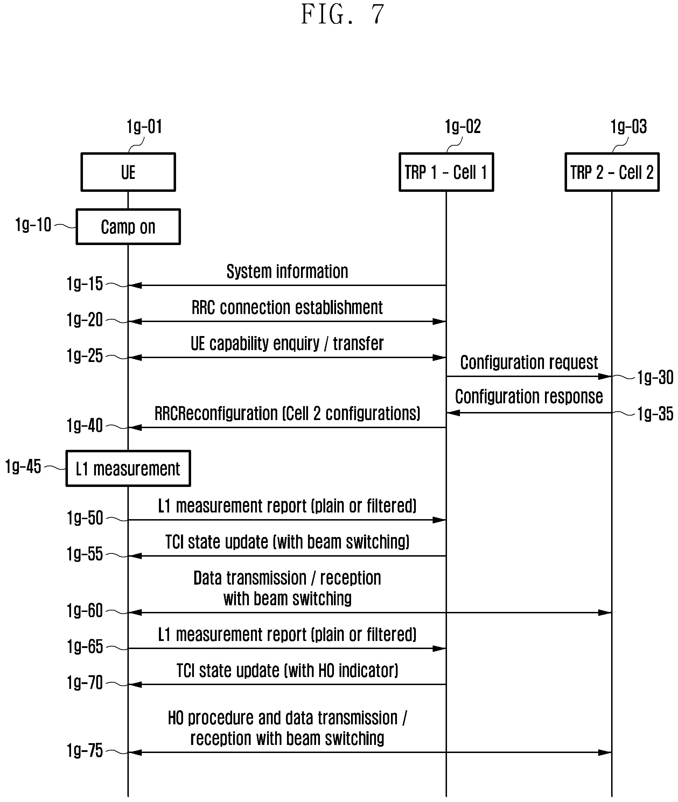

FIG. 7 is example 1 applied to the disclosure and illustrates the overall operation in which the handover is performed after inter-L1/L2 cell beam management is applied.

In a camp on state 1g-10, a UE 1g-01 receives system information from cell 1 1g-02 in operation 1g-15 and performs a transition procedure to a connected state in operation 1g-20. Thereafter, a serving cell 1f-02 makes a request for UE capability (transmits a UE capability enquiry message) to the UE, and the UE transfers a UE capability information message including the UE capability according to the request from the BS in operation 1g-25. The capability information of the corresponding UE may include information indicating whether inter cell beam switching/management based on L1/L2 and the handover are supported, and the UE transfers at least one of UE-specific capability, band-specific capability, or band combination-specific capability as the capability of the corresponding UE through the signaling. The serving cell 1g-02 may make a request for configuration information required for performing beam switching based on L1/L2 and the handover by the corresponding UE to neighbor cell 2 1g-03 supporting L1/L2-based mobility in operation 1g-25, and cell 2 1g-03 transfers a response message including relevant configuration information in response to the corresponding request in operation 1g-30. The procedures 1g-30 and 1g-35 may be omitted when cell 1 1g-02 and cell 2 1g-03 exist in one DU (intra-DU scenario) in implementation of the network.

In operation 1g-40, the serving cell may transfer common/dedicated configuration information applied after L1/L2-based mobility (beam switching and handover) to cell 2 1g-03 is indicated to the UE. In this embodiment, the difference from FIG. 6 is that common configuration and dedicated configuration information for an additional cell (TRP 2-Cell 2) 1g-03 having a PCI different from the serving cell is included in operation 1g-40. That is, configuration information corresponding to ServingCellID or candidateCellID (cell ID related to the PIC), ServingCellConfigCommon, and ServingCellConfig may be provided in advance to the UE. The corresponding configuration information may be provided in the form of a pre-configuration in the RRC configuration and may include configuration information on a plurality of cells. Further, the corresponding configuration includes all pieces of configuration information (cell configuration, bearer configuration, security key configuration, and the like) applied when the UE moves to (hands over) the corresponding cell. The corresponding configuration includes the unified TCI state configuration described in operation 1d-56 of FIG. 4 and configurations related to L1 measurement and report.

This embodiment additionally proposes an improved method from a robustness perspective to determine movement (handover) between cells based on L1 measurement of the UE. In general, L1 measurement includes a temporary report on measured CSI-RS resources and does not report the average or trend of measurement values, and thus a frequent handover operation (ping-pong phenomenon) between cells may occur when the L1 measurement is applied to movement (handover) between cells. In order to solve the problem, the following method is proposed.
1. First L1 measurement improvement method: the BS processes and applies an L1 measurement value reported by the UE
   1) The case where the L1 measurement value of the target cell reported by the UE is better than the L1 value of the serving cell by longer than a predetermined time (The reported L1 measurement of the target cell is huge enough during the static time compared with the beam quality of the serving cell)
   2) The case where the L1 measurement value of the target cell reported by the UE is better than the L1 value of the serving cell by a configured threshold value by more than a predetermined number of times (The number of reported L1 measurement(s) (e.g., counter) of the target cell better than the serving cell's beam is exceed the static value, e.g., 5 consecutive times)
   3) The BS derives a cell quality through the L1 measurement value of the target cell reported by the UE and compares the same with the serving cell (NW derives the cell quality using the own method based on the report L1 measurement, and apply the same logic of 1) and 2) above). For example, N best beams that exceed a threshold value are averaged to determine the cell quality.
2. Second L1 measurement improvement method: the UE also transmits additional information when reporting the L1 measurement value
   - Basically, L1 measurement and the report configuration are separately provided in a CSI measurement configuration. In a CSI resource configuration, periodic, aperiodic, or semi-periodic transmission of CSI resources may be configured, and the UE measures the corresponding resources according to the configuration. In a CSI report configuration, a report type (a periodic report, a semi-periodic report for a PUCCH, a semi-periodic report for a PUSCH, and an aperiodic report for a PUSCH) is provided.
      1) The UE reports a timer value in order to indicate how long the L1 measurement value reported by the L1 measurement report is better than the L1 value of the serving cell by the threshold value.
      2) The UE reports a counter value in order to indicate how many times the L1 measurement value reported by the L1 measurement report is better than the L1 value of the serving cell by the threshold value. When the beam quality of the target cell is smaller than the L1 value of the serving cell or a value obtained by adding the L1 value and the threshold value, the counter value is reset to 0. That is, it corresponds to the case where ping-pong occurs.
         ·NOTE: if the beam qualities between serving and target cell(s) experience the ping-pong, UE set the counter to 0 whenever the ping-pong is occur.
      3) When a specific condition that allows cell movement provided by the BS is satisfied, the UE includes a 1-bit indicator indicating that the same is satisfied. Threshold values of the timer and the counter value described in 1) and 2) may be used to determine the specific condition. That is, the UE compares the received timer and counter threshold values with its own L1 measurement value and determines whether to include the 1-bit indicator.
3. Third L1 measurement improvement method: both the UE and BS-based methods are applied
4. Fourth L1 measurement improvement method: new condition that triggers L1 report (introduction of event-based L1 report)
   1) Measurement values for N beams of neighbor cells are measured to exceed a threshold value (N is configured by the BS, and the best beam of neighbor cells is used when N is not configured)
   2) Measurement values for N beams of neighbor cells are measured to be larger than the best beam of the serving cell by a threshold value (N is configured by the BS, and the best beam of neighbor cells is used when N is not configured)
      - For the two conditions, filtering configured by the BS may be applied to the L1 measurement value (filtering aims at increasing robustness through a temporal averaging effect of measurement values, and filtering having such an effect is applied to used metric)
      - Further, the conditions may be triggered only when the quality of the serving cell is equal to or smaller than a specific threshold value. A relevant threshold value is transmitted by the BS as a configuration. This may be used to limit movement between cells when the quality of the serving cell is maintained at a predetermined level.
      - That is, when the quality of the serving cell is worse than the threshold value (serving cell < threshold), the UE applies criteria for an L1 measurement value report for a neighbor cell. The UE transmits the L1 measurement report for the neighbor cell. In cases other than the condition, the UE does not perform the L1 measurement report for the neighbor cell.
      - For reference, the serving cell may be a cell linked to the neighbor cell or may be a SpCell.

Thereafter, the UE performs L1 measurement associated with TRP 2-Cell 2 while maintaining the connected state with the serving cell 1g-02 in operation 1g-45, and reports the corresponding measurement result to the serving cell 1g-02 according to a preset L1 measurement report configuration method in operation 1g-50. One of the above-described methods (L1 measurement improvement methods) may be applied to the L1 measurement value report. The serving cell 1g-02 may determine beam switching of the UE, based on the received measurement result, and when it is determined that beam switching to a specific beam of TRP 2-Cell 2 rather than to a specific beam (TRP1-Cell 1) of the serving cell is needed, indicate TCI state switching of the UE to a target cell (TRP 2-Cell 2) through L1/L2 signaling in operation 1g-55. L1/L2 signaling in operation 1g-55 may be a MAC CE or DCI, and information indicating switching to the specific beam of TRP 2-Cell 2 is included in the corresponding signaling. At this time, when a plurality of TCI states is activated, the MAC CE may be used and one of the activated TCI states may be indicated by DCI. Unlike this, the MAC CE may indicate only one TCI state. In this case, the DCI is omitted. In operation 1g-60, the UE switches the beam to the indicated beam in TRP 2-Cell 2 1g-03 and performs data transmission and reception through the corresponding beam. Even during the operation, the UE maintains the RRC connection with the serving cell.

The UE performs L1 measurement associated with TRP 2-Cell 2 while maintaining the connected state with the serving cell 1g-02 according to the configuration even thereafter, and reports the corresponding measurement result to the serving cell 1g-02 according to a preset L1 measurement report configuration method in operation 1g-65. One of the above-described methods (L1 measurement improvement methods) may be applied to the L1 measurement value report. The serving cell 1g-02 may determine cell switching (handover) of the UE, based on the received measurement result, and simultaneously indicates TCI state switching of the UE to a target cell (TRP 2-Cell 2) and the handover through L1/L2 signaling in operation 1g-70. L1/L2 signaling in operation 1g-70 may be a MAC CE or DCI, and information indicating switching to the specific beam of TRP 2-Cell 2 and the handover is included in the corresponding signaling. At this time, when a plurality of TCI states is activated, the MAC CE may be used and one of the activated TCI states may be indicated by DCI. Alternatively, only one TCI state may be indicated by the MAC CE. In this case, the DCI is omitted. In operation 1g-75, the UE hands over to TRP 2-Cell 2 1g-03, switches the beam to the indicated beam, and performs data transmission and reception through the corresponding beam.

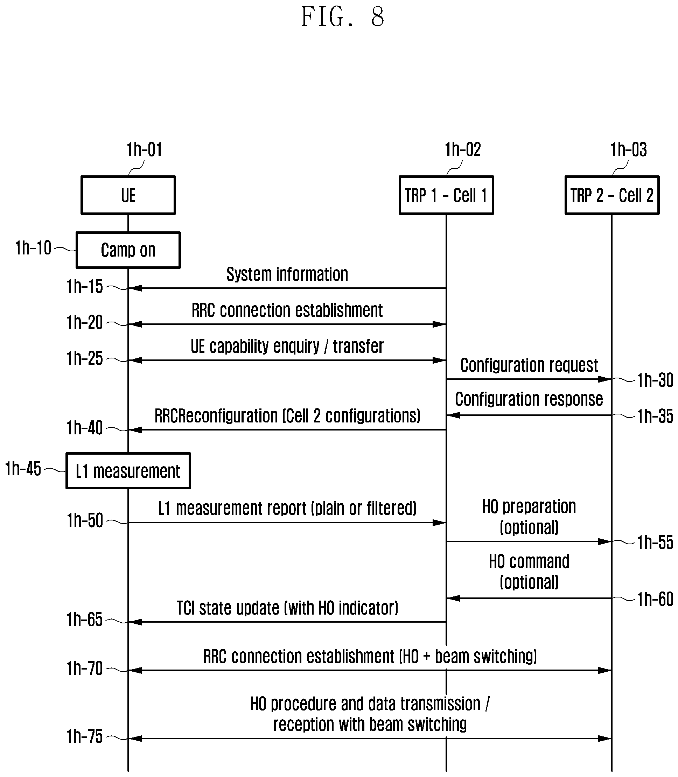

FIG. 8 is example 2 applied to the disclosure and illustrates the overall operation of performing an L1/L2 inter-cell handover.

A UE 1h-01 receives system information from cell 1 1h-02 in a comp on state 1h-10 in operation 1h-15 and performs a transition procedure to a connected state in operation 1h-20. Thereafter, a serving cell 1h-02 makes a request for UE capability (transmits a UE capability enquiry message) to the UE, and the UE transfers a UE capability information message including the UE capability to the BS according to the request from the BS in operation 1h-25. The capability information of the corresponding UE may include information indicating whether inter-cell beam switching/management based on L1/L2 and the handover are supported, and the UE transfers at least one of UE-specific capability, band-specific capability, or band combination-specific capability as the capability of the corresponding UE through the signaling. The serving cell 1h-02 may make a request for configuration information required for performing beam switching based on L1/L2 and the handover by the corresponding UE to neighbor cell 2 1h-03 supporting L1/L2-based mobility in operation 1h-25, and cell 2 1h-03 transfers a response message including relevant configuration information in response to the corresponding request in operation 1h-30. The procedures 1h-30 and 1h-35 may be omitted when cell 1 1h-02 and cell 2 1h-03 exist in one DU (intra-DU scenario) in implementation of the network.

In operation 1h-40, the serving cell may transfer common/dedicated configuration information applied after L1/L2-based mobility (beam switching and handover) to cell 2 1h-03 is indicated to the UE. In this embodiment, the difference from FIG. 6 is that common configuration and dedicated configuration information for an additional cell (TRP 2-Cell 2) 1h-03 having a PCI different from the serving cell is included in operation 1h-40. That is, configuration information corresponding to ServingCellID or candidateCellID (cell ID related to the PIC), ServingCellConfigCommon, and ServingCellConfig may be provided in advance to the UE. The corresponding configuration information may be provided in the form of a pre-configuration in the RRC configuration and may include configuration information on a plurality of cells. Further, the corresponding configuration includes all pieces of configuration information (cell configuration, bearer configuration, security key configuration, and the like) applied when the UE moves to (hands over) the corresponding cell. The corresponding configuration includes the unified TCI state configuration described in operation 1d-56 of FIG. 4 and configurations related to L1 measurement and report. This embodiment additionally proposes an improved method from a robustness perspective to determine movement (handover) between cells based on L1 measurement of the UE. In general, L1 measurement includes a temporary report on measured CSI-RS resources and does not report the average or trend of measurement values, and thus a frequent handover operation (ping-pong phenomenon) between cells may occur when the L1 measurement is applied to movement (handover) between cells. In order to solve the problem, the following method is proposed.
1. First L1 measurement improvement method: the BS processes and applies an L1 measurement value reported by the UE
   1) The case where the L1 measurement value of the target cell reported by the UE is better than the L1 value of the serving cell by a configured threshold value for a time longer than a predetermined time (The reported L1 measurement of the target cell is huge enough during the static time compared with the beam quality of the serving cell)
   2) The case where the L1 measurement value of the target cell reported by the UE is better than the L1 value of the serving cell by a preset threshold value by more than a predetermined number of times (The number of reported L1 measurement(s) (e.g., counter) of the target cell better than the serving cell's beam is exceed the static value, e.g., 5 consecutive times)
   3) The BS derives a cell quality through the L1 measurement value of the target cell reported by the UE and compares the same with the serving cell (NW derives the cell quality using the own method based on the report L1 measurement, and apply the same logic of 1) and 2) above). For example, N best beams that exceed a threshold value are averaged to determine the cell quality.
2. Second L1 measurement improvement method: the UE also transmits additional information when reporting the L1 measurement value.
   - Basically, L1 measurement and report configuration are separately provided in a CSI measurement configuration. In a CSI resource configuration, periodic, aperiodic, or semi-periodic transmission of CSI resources may be configured, and the UE measures the corresponding resources according to the configuration. In a CSI report configuration, a report type (a periodic report, a semi-periodic report for a PUCCH, a semi-periodic report for a PUSCH, and an aperiodic report for a PUSCH) is provided.
      1) The UE reports a timer value in order to indicate how long the L1 measurement value reported by the L1 measurement report is better than the L1 value of the serving cell by the threshold value.
      2) The UE reports a counter value in order to indicate how many times the L1 measurement value reported by the L1 measurement report is better than the L1 value of the serving cell by the threshold value. When the beam quality of the target cell is smaller than the L1 value of the serving cell or a value obtained by adding the L1 value and the threshold value, the counter value is reset to 0. That is, it corresponds to the case where ping-pong occurs.
         ·NOTE: if the beam qualities between serving and target cell(s) experience the ping-pong, UE set the counter to 0 whenever the ping-pong is occur.
      3) When a specific condition that allows cell movement provided by the BS is satisfied, the UE includes a 1-bit indicator indicating that the same is satisfied. Threshold values of the timer and the counter value described in 1) and 2) may be used to determine the specific condition. That is, the UE compares the received timer and counter threshold values with its own L1 measurement value and determines whether to include the 1-bit indicator.
3. Third L1 measurement improvement method: both the UE and BS-based methods are applied
4. Fourth L1 measurement improvement method: new condition that triggers L1 report (introduction of event-based L1 report)
   1) Measurement values for N beams of neighbor cells are measured to exceed a threshold value (N is configured by the BS, and the best beam of neighbor cells is used when N is not configured)
   2) Measurement values for N beams of neighbor cells are measured to be larger than the best beam of the serving cell by a threshold value (N is configured by the BS, and the best beam of neighbor cells is used when N is not configured)
      - For the two conditions, filtering configured by the BS may be applied to the L1 measurement value (filtering aims at increasing robustness through a temporal averaging effect of measurement values, and filtering having such an effect is applied to used metric).
      - Further, the conditions may be triggered only when the quality of the serving cell is equal to or smaller than a specific threshold value. A relevant threshold value is transmitted by the BS as a configuration. This can be used to limit movement between cells when the quality of the serving cell is maintained at a predetermined level.
      - That is, when the quality of the serving cell is worse than the threshold value (serving cell < threshold), the UE applies criteria for an L1 measurement value report for a neighbor cell. The UE performs the L1 measurement report for the neighbor cell. In cases other than the condition, the UE does not transmit the L1 measurement report for the neighbor cell.
      - For reference, the serving cell may be a cell linked to the neighbor cell or may be a SpCell.

Thereafter, the UE performs L1 measurement associated with TRP 2-Cell 2 while maintaining the connected state with the serving cell 1h-02 in operation 1h-45, and reports the corresponding measurement result to the serving cell 1h-02 according to a preset L1 measurement report configuration method in operation 1h-50. One of the above-described methods (L1 measurement improvement methods) may be applied to the L1 measurement value report. The serving cell 1h-02 may determine cell switching (handover) of the UE, based on the received measurement result, perform a handover negotiation procedure through a handover request 1h-55 with the target cell in operation 1h-55 and a configuration message reception procedure 1h-60, and then simultaneously indicate TCI state switching of the UE to the target cell TRP 2-Cell 2 and the handover through L1/L2 signaling in operation 1h-65. For reference, operations 1h-50 and 1h-55 may be omitted, which corresponds to the case of intra-DU in network implementation or the case where the relevant information in operation 1h-40 has been already shared. L1/L2 signaling in operation 1h-70 may be a MAC CE or DCI, and information indicating switching to the specific beam of TRP 2-Cell 2 and the handover is included in the corresponding signaling. At this time, when a plurality of TCI states is activated, the MAC CE may be used and one of the activated TCI states may be indicated by DCI. Unlike this, the MAC CE may indicate only one TCI state. In this case, the DCI is omitted. In operation 1h-75, the UE hands over to TRP 2-Cell 2 1h-03, switches the beam to the indicated beam, and performs data transmission and reception through the corresponding beam.

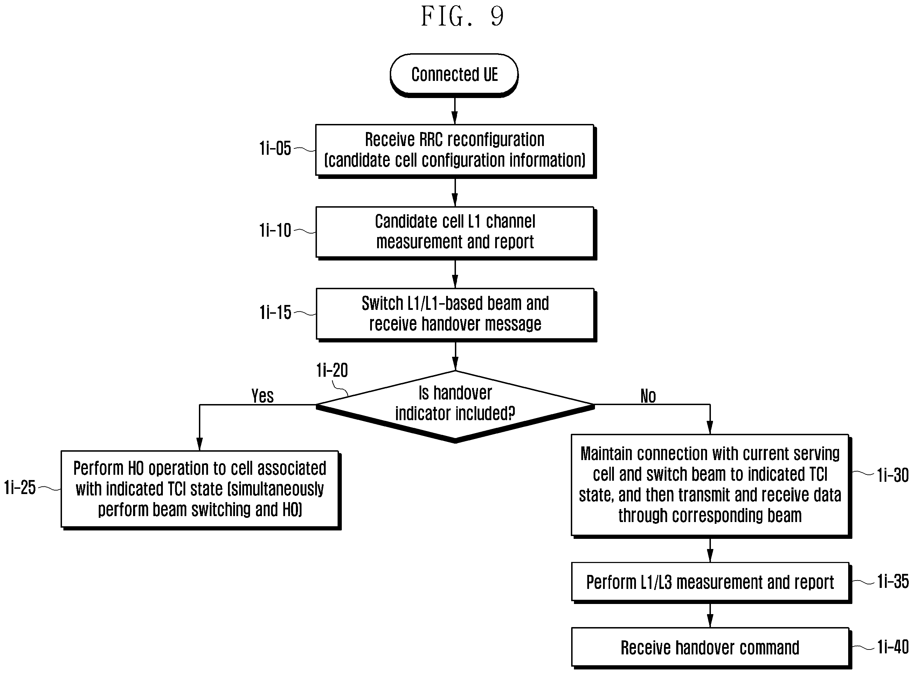

FIG. 9 illustrates the overall UE operation which is applied to examples of the disclosure and in which L1/L2-based beam switching and handover is performed and, particularly, a UE operation including a channel measurement and report method of the UE.

In operation 1i-05, the UE in the connected state may receive, from the serving cell, common/dedicated configuration information in a neighbor cell applied after L1/L2-based movement is indicated through an RRC reconfiguration message. For a detailed configuration method and content, refer to FIGs. 4, 5A, and 5B.

Thereafter, the UE performs L1 measurement related to candidate neighbor cells while maintaining the connected state with the serving cell and reports the corresponding measurement result to the serving cell according to a preset L1 measurement reporting configuration method in operation 1i-10. Particularly, a detailed operation related to the L1 measurement configuration and report method in this operation may follow FIGs. 7 and 8 described above.

The serving cell may determine whether to perform beam switching and handover of the UE, based on the measurement result received from the UE, and when it is determined that switching to a specific beam of the neighbor cell rather than to a specific beam of the serving cell is needed, indicates TCH state switching of the UE through L1/L2 signaling in operation 1i-15. At this time, the L1/L2 signaling is different from the conventional operation in that the handover can also be triggered. The L1/L2 signaling may be a MAC CE or DCI, and information indicating the specific beam of the neighbor cell and the serving cell switching is included in the corresponding signaling.

In operation 1i-20, the UE checks whether there is a handover indicator to a non-serving cell in the L1/L2 signaling received in operation 1i-15 and perform different operations depending thereon. If it is configured to always perform the handover to the corresponding cell or a standard operation is determined when L1/L2 signaling is received, the UE operation of checking the separate handover indicator may be omitted.

When the handover indicator is included in the received MAC CE, the UE performs the handover to a cell associated with the TCI state indicated in operation 1i-25, applies the configuration for the corresponding cell stored as a pre-configuration according to the handover, and performs data transmission and reception using the indicated beam.

When the handover indicator is not included in the received MAC CE, the UE maintains the connection with the current serving cell and switches the beam to the TCI state of the indicated cell, and then performs data transmission and reception through the corresponding beam in operation 1i-30. After beam switching, the UE performs data transmission and reception through a dedicated channel (PDCCH/PDSCH, and PUCCH/PUSCH) of the corresponding beam.

In operation 1i-35, the UE performs the L1 measurement and report for neighbor cells, and a radio resource management (RRM) procedure, that is, an L2 measurement and channel report operation. Through the L1 measurement report or the L3 measurement report of the UE, the serving cell may indicate serving cell switching by indicating the need of handover to a neighbor cell to the UE in this operation.

In operation 1i-40, the UE may receive a handover command through L1/L2 signaling or an RRC message, and when the UE receiving the same is already performing beam switching to the neighbor cell and performing data transmission and reception with the corresponding cell, the random access-related operation may be omitted. The UE switches the serving cell according to the handover indication and releases the configuration of the previous serving cell.

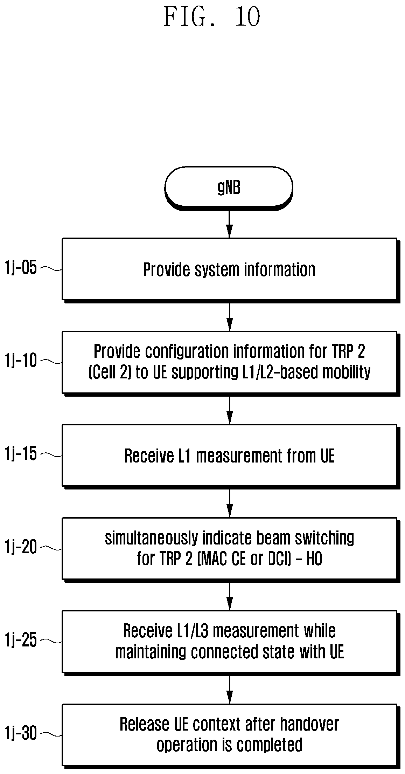

FIG. 10 illustrates a BS operation applied to examples of the disclosure.

The BS provides system information to the UE in operation 1j-05 and transfers common/dedicated configuration information on neighbor cells applied after L1/L2-based movement is indicated through an RRC reconfiguration message provided by the serving cell to the UE in a connected state in operation 1j-10. For a detailed configuration method and content, refer to FIGs. 4, 5A, and 5B.

Thereafter, the BS receives an L1 measurement value from the UE in operation 1j-15, in which case the measurement value may be a measurement value for a neighbor cell (non-serving cell) supporting L1/L2-based mobility.

The serving cell may determine whether to perform beam switching of the UE, based on the measurement result received from the UE, and when it is determined that switching to a specific beam of the neighbor cell rather than to a specific beam of the serving cell is needed, indicates TCH state switching of the UE through L1/L2 signaling in operation 1j-20. The L1/L2 signaling may be a MAC CE or DCI, and information indicating the switching to the specific beam of the neighbor cell is included in the corresponding signaling. Further, in the corresponding operation, the handover may also (simultaneously) be indicated through L1/L2 signaling. When the handover is simultaneously indicated, the serving cell performs the handover procedure, and deletes context of the UE and releases the connection when the handover with a target cell is completed. At this time, a measurement value used to determine whether to perform the handover is the L1 measurement, and refer to FIGs. 7 and 8 for various methods proposed in connection with this.

When the L1/L2 signaling does not include the handover procedure, the serving cell maintains the connected state with the UE in operation 1j-25. In the corresponding operation, the UE performs data transmission and reception through a dedicated channel (PDCCH/PDSCH and PUCCH/PUSCH) by applying configuration information for a preset neighbor cell. At this time, the UE may return to the current serving cell from the link to the neighbor cell.

In operation 1j-25, the serving cell may receive an additional L1/L3 measurement report from the UE in the connected state with the UE, and when it is determined that the handover of the UE to a neighbor cell is needed, transmit a handover message to the corresponding UE and indicates switching of the serving cell.

In operation 1j-30, when the UE switches the serving cell according to a handover indication, the UE releases a configuration of a previous serving cell.

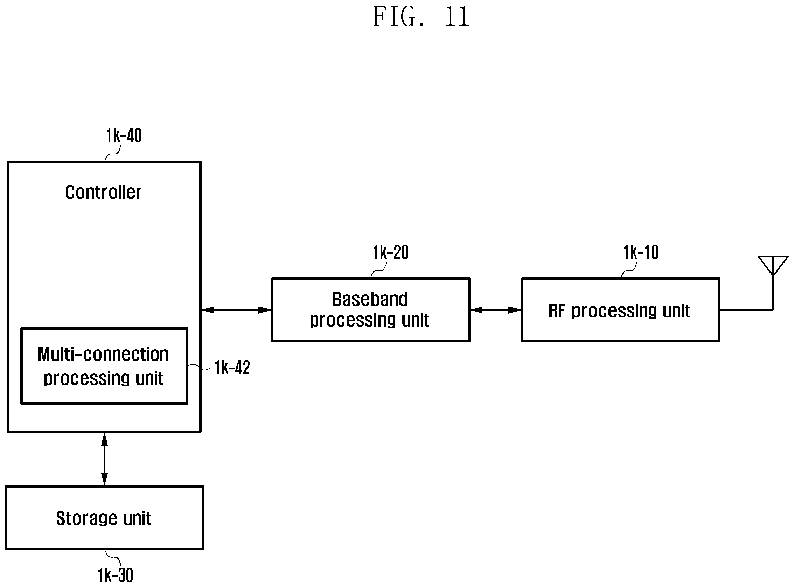

FIG. 11 is a block diagram illustrating an internal structure of the UE to which the disclosure is applied.

Referring to FIG. 11, the UE includes a radio frequency (RF) processing unit 1k-10, a baseband processing unit 1k-20, a storage unit 1k-30, and a controller 1k-40.

The RF processing unit 1k-10 performs a function for transmitting and receiving a signal through a radio channel, such as band conversion and amplification of a signal. That is, the RF processing unit 1k-10 up-converts a baseband signal provided from the baseband processing unit 1k-20 into an RF band signal, transmits the RF band signal through an antenna, and then down-converts the RF band signal received through the antenna into a baseband signal. For example, the RF processing unit 1k-10 may include a transmission filter, a reception filter, an amplifier, a mixer, an oscillator, a digital-to-analog convertor (DAC), an analog-to-digital convertor (ADC), and the like. Although only one antenna is illustrated in the drawing, the UE may include a plurality of antennas. The RF processing unit 1k-10 may include a plurality of RF chains. Further, the RF processing unit 1k-10 may perform beamforming. For the beamforming, the RF processing unit 1k-10 may control the phase and size of each signal transmitted/received through a plurality of antennas or antenna elements. The RF processing unit may perform MIMO and receive a plurality of layers when performing the MIMO operation.

The baseband processing unit 1k-20 performs a function for conversion between a baseband signal and a bitstream according to a physical layer standard of the system. For example, in data transmission, the baseband processing unit 1k-20 generates complex symbols by encoding and modulating a transmission bitstream. Further, in data reception, the baseband processor 1k-20 reconstructs a reception bitstream by demodulating and decoding a baseband signal provided from the RF processor 1k-10. For example, in an orthogonal frequency-division multiplexing (OFDM) scheme, when data is transmitted, the baseband processing unit 1k-20 generates complex symbols by encoding and modulating a transmission bitstream, maps the complex symbols to subcarriers, and then configures OFDM symbols through an inverse fast Fourier transform (IFFT) operation and a cyclic prefix (CP) insertion. Further, when data is received, the baseband processing unit 1k-20 divides the baseband signal provided from the RF processing unit 1k-10 in units of OFDM symbols, reconstructs the signals mapped to the subcarriers through a fast Fourier transform (FFT) operation, and then reconstructs a reception bitstream through demodulation and decoding.

The baseband processing unit 1k-20 and the RF processing unit 1k-10 may transmit and receive signals as described above. Accordingly, each of the baseband processing unit 1k-20 and the RF processing unit 1k-10 may be referred to as a transmitter, a receiver, a transceiver, or a communication unit. Further, at least one of the baseband processing unit 1k-20 and the RF processing unit 1k-10 may include a plurality of communication modules for supporting a plurality of different radio-access technologies. At least one of the baseband processing unit 1k-20 and the RF processing unit 1k-10 may include different communication modules for processing signals in different bands. For example, the different radio access technologies may include a wireless LAN (for example, IEEE 802.11) and a cellular network (for example, LTE). Further, the different frequency bands may include a super high frequency (SHF) (for example, 2.NRHz, NRhz) band and a millimeter (mm) wave (for example, 60 GHz) band.

The storage unit 1k-30 stores data such as a basic program for the operation of the UE, an application, and configuration information. Particularly, the storage unit 1k-30 may store information related to a second access node that performs wireless communication through a second radio access technology. The storage unit 1k-30 provides stored data in response to a request from the controller 1k-40.

The controller 1k-40 controls the overall operation of the UE. For example, the controller 1k-40 transmits and receives a signal through the baseband processing unit 1k-20 and the RF processing unit 1k-10. The controller 1k-40 records data in the storage unit 1k-30 and reads the data. To this end, the controller 1k-40 may include at least one processor. For example, the controller 1k-40 may include a communications processor (CP) that performs control for communication, and an application processor (AP) that controls higher layers such as an application layer.

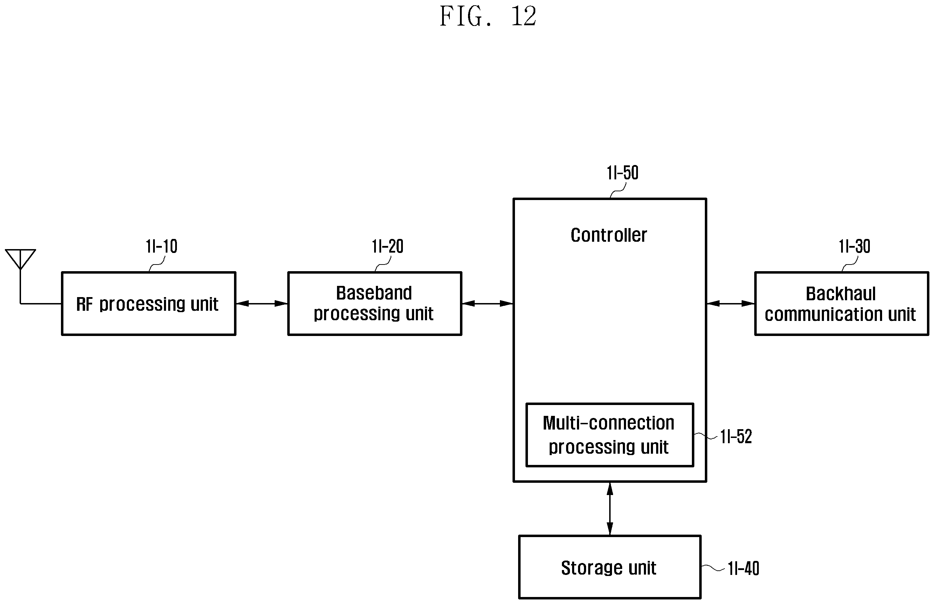

FIG. 12 is a block diagram illustrating a configuration of the base station according to the disclosure.

As illustrated in FIG. 12, the base station includes an RF processing unit 11-10, a baseband processing unit 11-20, a backhaul communication unit 11-30, a storage unit 11-40, and a controller 11-50.

The RF processor 11-10 performs a function for transmitting and receiving a signal through a wireless channel, such as band conversion and amplification of a signal. That is, the RF processing unit 11-10 up-converts a baseband signal provided from the baseband processing unit 11-20 into an RF band signal, transmits the RF band signal through an antenna, and then down-converts the RF band signal received through the antenna into a baseband signal. For example, the RF processing unit 11-10 may include a transmission filter, a reception filter, an amplifier, a mixer, an oscillator, a DAC, and an ADC. Although only one antenna is illustrated in the drawing, the first access node may include a plurality of antennas. In addition, the RF processing unit 11-10 may include a plurality of RF chains. The RF processing unit 11-10 may perform beamforming. For the beamforming, the RF processing unit 11-10 may control a phase and a size of each of the signals transmitted and received through a plurality of antennas or antenna elements. The RF processing unit may perform a downlink MIMO operation by transmitting one or more layers.

The baseband processing unit 11-20 performs a function of performing conversion between a baseband signal and a bitstream according to a physical-layer standard of the first radio access technology. For example, when data is transmitted, the baseband processing unit 11-20 generates complex symbols by encoding and modulating a transmission bitstream. Further, when data is received, the baseband processing unit 11-20 reconstructs a reception bitstream by demodulating and decoding a baseband signal provided from the RF processing unit 11-10. For example, in an OFDM scheme, when data is transmitted, the baseband processing unit 11-20 may generate complex symbols by encoding and modulating the transmission bitstream, map the complex symbols to subcarriers, and then configure OFDM symbols through an IFFT operation and CP insertion. In addition, when data is received, the baseband processing unit 11-20 divides a baseband signal provided from the RF processing unit 11-10 in units of OFDM symbols, recovers signals mapped with sub-carriers through an FFT operation, and then recovers a reception bit string through demodulation and decoding. The baseband processing unit 11-20 and the RF processing unit 11-10 transmit and receive a signal as described above. Accordingly, the baseband processing unit 11-20 and the RF processing unit 11-10 may be referred to as a transmitter, a receiver, a transceiver, a communication unit, or a wireless communication unit.

The backhaul communication unit 11-30 provides an interface for communicating with other nodes within the network. That is, the backhaul communication unit 11-30 converts a bitstream transmitted to another node, for example, a secondary base station or a core network from the main base station, into a physical signal and converts the physical signal received from the other node into the bitstream.

The storage unit 11-40 stores data such as a basic program, an application, and setting information for the operation of the main base station. Particularly, the storage unit 11-40 may store information on a bearer allocated to the accessed UE and a measurement result reported from the accessed UE. Further, the storage unit 11-40 may store information which is a reference for determining whether to allow or interrupt multiple accesses to the UE. The storage unit 11-40 provides stored data according to a request from the controller 11-50.

The controller 11-50 controls the overall operation of the main base station. For example, the controller 11-50 transmits and receives a signal through the baseband processor 11-20 and the RF processor 11-10 or through the backhaul communication unit 11-30. Further, the controller 11-50 records data in the storage unit 11-40 and reads the data. To this end, the controller 11-50 may include at least one processor.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method of a base station in a wireless communication system, the method comprising:
transmitting a radio resource control (RRC) message comprising first information on a serving cell for serving a terminal and second information on a candidate cell related to a cell switching procedure to the terminal; and
receiving a report on layer 1 (L1) measurement for the candidate cell from the terminal, based on the RRC message,
wherein the second information comprises cell configuration information of the candidate cell, and
wherein the report is received by the serving cell, based on a configuration for a measurement report included in the first information.

2. The method of claim 1, wherein the L1 measurement is based on a configuration for a transmission configuration indicator (TCI) state related to the candidate cell.

3. The method of claim 1, comprising transmitting information on a condition for triggering transmission of the report to the terminal,
wherein the information is configured for at least one of a threshold value for a strength of the L1 measurement or a time of the L1 measurement.

4. The method of claim 3, wherein the report comprises a timer value indicating the time of the L1 measurement.

5. A method of a terminal in a wireless communication system, the method comprising:
receiving a radio resource control (RRC) message comprising first information on a serving cell for serving the terminal and second information on a candidate cell related to a cell switching procedure from a base station;
performing layer 1 (L1) measurement for the candidate cell, based on the RRC message; and
transmitting a report on the L1 measurement to the base station, based on a configuration for a measurement report included in the first information,
wherein the second information comprises cell configuration information of the candidate cell.

6. The method of claim 5, wherein the L1 measurement is performed based on a configuration for a transmission configuration indicator (TCI) state related to the candidate cell.

7. The method of claim 5, comprising receiving information on a condition for triggering transmission of the report from the base station,
wherein the information is configured for at least one of a threshold value for a strength of the L1 measurement or a time of the L1 measurement.

8. The method of claim 6, wherein the report comprises a timer value indicating the time of the L1 measurement.

9. A base station in a wireless communication system, the base station comprising:
a transceiver; and
a controller configured to control the transceiver to transmit a radio resource control (RRC) message comprising first information on a serving cell for serving a terminal and second information on a candidate cell related to a cell switching procedure from the terminal and control the transceiver to receive a report on layer 1 (L1) measurement for the candidate cell from the terminal, based on the RRC message,
wherein the second information comprises cell configuration information of the candidate cell, and
wherein the report is received by the serving cell, based on a configuration for a measurement report included in the first information.

10. The base station of claim 9, wherein the L1 measurement is based on a configuration for a transmission configuration indicator (TCI) state related to the candidate cell.

11. The base station of claim 9, wherein the controller is configured to control the transceiver to transmit information on a condition for triggering transmission of the report to the terminal, and
wherein the information is configured for at least one of a threshold value for a strength of the L1 measurement or a time of the L1 measurement.

12. The base station of claim 11, wherein the report comprises a timer value indicating the time of the L1 measurement.

13. A terminal in a wireless communication system, the terminal comprising:
a transceiver; and
a controller configured to control the transceiver to receive a radio resource control (RRC) message comprising first information on a serving cell for serving the terminal and second information on a candidate cell related to a cell switching procedure from a base station, perform layer 1 (L1) measurement for the candidate cell, based on the RRC message, and control the transceiver to transmit a report on the L1 measurement to the base station, based on a configuration for a measurement report included in the first information,
wherein the second information comprises cell configuration information of the candidate cell.

14. The terminal of claim 13, wherein the L1 measurement is performed based on a configuration for a transmission configuration indicator (TCI) state related to the candidate cell.

15. The terminal of claim 13, wherein the controller is configured to control the transceiver to receive information on a condition for triggering transmission of the report from the base station,
wherein the information is configured for at least one of a threshold value for a strength of the L1 measurement or a time of the L1 measurement, and
wherein the report comprises a timer value indicating the time of the L1 measurement.
